# EUROPÄISCHE PATENTANMELDUNG

(11) **EP 1 607 210 A1**
(43) Veröffentlichungstag der Anmeldung: **21.12.2005**
(21) Anmeldenummer: 04008178.8
(22) Anmeldetag: 03.04.2004
(51) Int. Cl.: B29C 70/54, B29C 70/44

(54) **Mehrschichtfolie zur herstellung von faserverbundwerkstoffen**

(71) Anmelder: TUHH-Technologie GmbH, 21079 Hamburg (DE); Technische Universität Hamburg-Harburg, 21073 Hamburg (DE)
(72) Erfinder: Fiedler, Bodo, Dr.-Ing., 21075 Hamburg (DE); Schulte, Karl, Prof.Dr.-Ing., 21244 Buchholz (DE)
(74) Vertreter: Eisenführ, Speiser & Partner

(57) **Zusammenfassung**

Die Erfindung betrifft eine Mehrschichtfolie, insbesondere zur Verarbeitung von Faserverbundwerkstoffen (1). Bei bekannten Laminierverfahren müssen mehrere verschiedene Schichten bzw. Folien übereinander gelegt werden, wodurch diese Verfahren sehr arbeits- und kostenintensiv sind. Außerdem können durch Faltenwürfe Fehler im hergestellten Bauteil verursacht werden. Dies wird bei der erfindungsgemäßen Mehrschichtfolie dadurch vermieden, dass eine erste, gasundurchlässige Schicht (10) und eine zweite, mit der ersten Schicht verbundene Schicht (20) mit zur Umgebung hin offenen Poren zum Aufnehmen eines flüssigen Polymers vorgesehen sind.

## Beschreibung

Die Erfindung betrifft eine Folie, welche insbesondere zur Herstellung von Bauteilen aus Faserverbundwerkstoffen geeignet ist. Die Erfindung betrifft weiterhin ein Verfahren zum Herstellen von Bauteilen aus Faserverbundwerkstoffen und ein mittels des Verfahrens hergestelltes Bauteil.

Die Bezeichnung Faserverbundwerkstoffe wird in dieser Beschreibung und den anhängenden Ansprüchen als Oberbegriff für Materialien verwendet, die aus einem Matrixwerkstoff bestehen, in den Fasern irgendeiner Art eingebettet sind.

Es ist bekannt, zur Herstellung von Bauteilen aus faserverstärkten Kunststoffen ein aus mehreren Arbeitsschritten bestehendes Verfahren anzuwenden, bei dem in einem ersten Verfahrensschritt eine Form, beispielsweise eine Holzform, welche die spätere Bauteilgeometrie bestimmt, hergestellt wird und in nachfolgenden Verfahrensschritten unter Verwendung dieser Form ein Bauteil hergestellt wird. Regelmäßig können dabei auch, unter Wiederverwendung der Form, eine Vielzahl von gleichartigen. Bauteilen hergestellt werden. Dabei wird jeweils zunächst ein gegebenenfalls mehrlagiges Laminat auf die Form aufgebracht. Das Laminat besteht regelmäßig aus mehreren Faseriagen, die mit Matrixwerkstoff vorimprägniert sein können oder auf die jeweils nach Aufbringen auf die Form Matrixmaterial aufgetragen wird. Das. Laminat kann auch als mehrlagiger, vorimprägnierter Rohling, also als sogenannter "Prepreg", vorliegen.

Das so aufgetragene Faserverbundlaminat besteht regelmäßig aus mehreren Faserlagen, die gewebt, gewirkt, ungeordnete oder in anderer Weise ausgeführt sein können, und einem flüssigen, aushärtbaren Matrixmaterial, welches diese Schichten durchtränkt und verbindet. Als Matrixmaterial werden regelmäßig Polymermaterialien, insbesondere Harze, verwendet.

Es ist weiterhin bekannt, auf das Laminat eine oder mehrere saugfähige Verarbeitungszwischenschichten aufzulegen, Welche überschüssiges Matrixmaterial aufnehmen können. Nach Auflegen dieser saugfähigen Verarbeitungszwischenschichten wird abschließend eine Verarbeitungsabdichtfolie auf die oberste Verarbeitungszwischenschicht aufgelegt. Diese Verarbeitungsabdichtfolie wird am Formenrand gasdicht verklebt. Nachfolgend wird durch zumindest teilweises Entfernen der Luft aus dem solcher; Art abgedichteten Zwischenraum zwischen Folie und Form ein exaktes Anlegen des Laminats an die Form, eine Verdichtung des Laminats und ein Entfernen von Luft zwischen den gegebenenfalls mehreren Lagen des Laminats erreicht.

Beim Entfernen der Luft aus dem Zwischenraum zwischen Verarbeitungsabdichtfolie und Bauteilform wird dann aus dem Laminat austretendes Matrixmaterial von den Verarbeitungszwischenschichten aufgenommen und es kann auf diese Weise ein Faserverbündwerkstoff mit hohem Faservolumengehalt hergestellt werden. Dieser zeichnet sich darüber hinaus auch durch weitere vorteilhafte Eigenschaften aus, beispielsweise durch eine hochwertige und detailreiche Bauteiloberfläche, die durch das gute Anlegen des Laminats und der Verarbeitungszwischenschichten an durch die Form ausgebildete Oberflächendetails des Laminats erreicht wird.

Das Entfernen der Luft aus dem Zwischenraum zwischen Folie und Form wird durch Erzeugen eines Vakuums in dem Zwischenraum (Vakuumpressen) oder durch Erhöhung des Umgebungsluftdrucks um den Zwischenraum herum (Autoklavierung), oder eine Kombination aus dem Vorgenannten erreicht. Beim Vakuumpressen wird eine Druckdifferenz zwischen Umgebung und Zwischenraum von bis zu ca. 1 bar erreicht, bei der Autoklavierung eine Druckdifferenz von bis zu 7 bar.

Während oder nach dem Entfernen der Luft wird eine Aushärtung des Laminats; beispielsweise durch Reaktionsvernetzung des Matrixwerkstoffes (regelmäßig Harz) unter gegebenenfalls erhöhter Temperatur erreicht. In einem nachfolgenden Arbeitsschritt werden die Verarbeitungsfolien entfernt und das Bauteil kann von der Form abgenommen werden.

Das vorgenannte Verfahren wird beispielsweise als "Handlaminierverfahren" bezeichnet, in diesem Fall erfolgt die Auftragung des Laminats durch manuelles Aufbringen von Fasermatten und Harzschichten, gegebenenfalls mehrfach übereinanderliegend, sowie möglicherweise zusätzlicher Feinschichten, Trennmittelschichten und/oder Gelcoatschichten.

Das Ablegen des Laminats kann jedoch auch automatisiert ablaufen, beispielsweise unter Verwendung eines Tape-Leger-Roboters.

Bekannte Verfahren weisen den Nachteil auf, dass sie durch die Notwendigkeit des Auflegens von einzelnen Verarbeitungsschichten sehr arbeitsintensiv sind und dadurch hohe Kosten verursachen. Dieser Nachteil wird weiter verstärkt, wenn zwecks Erzielen einer besseren Harzaufnahme und einer besseren Bauteiloberfläche mehrere harzaufnehmende Verarbeitungszwischenschichten nacheinander aufgelegt werden, bevor die gasdichte Verarbeitungsabdichtfolie aufgelegt wird. Zudem ist die Gefahr von Undichtigkeiten und damit unzureichender Absaugwirkung gegeben und es können durch Faltenwürfe in einer der aufgelegten Schichten Fehler im hergestellten Bauteil verursacht werden.

Der Erfindung lag die Aufgabe zugrunde, ein Verfahren und Mittel zur Ausführung des Verfahrens bereitzustellen, welche(s) eine gegenüber dem Stand der Technik vereinfachte Herstellung von Bauteilen aus Faserverbundwerkstoffen ermöglicht.

Die Aufgabe wird erfindungsgemäß mittels einer Mehrschichtfolie mit einer ersten, gasundurchlässigen Schicht und einer zweiten, mit der ersten Schicht verbundenen Schicht mit zur Umgebung hin offenen Poren zum Aufnehmen eines flüssigen Matrixmaterials gelöst

Die erfindungsgemäße Mehrschichtfolie weist unter anderem den Vorteil auf, dass die erste, gasundurchlässige Schicht mit der zweiten, saugfähigen Schicht verbunden ist und folglich diese beiden Schichten in einem einzigen Arbeitsgang auf das Laminat aufgelegt werden können, wodurch eine einfachere, schnellere und folglich kostengünstigere Herstellungsweise ermöglicht wird. Darüber hinaus weist die erfindungsgemäße Mehrschichtfolie den Vorteil auf, dass Verschiebungen, Verwerfungen und Faltenbildungen der Schichten zueinander nicht auftreten können, wodurch die Gefahr von Produktionsfehlern verringert wird. Es ist daher nur erforderlich, eine einzige Mehrschichtfolie passend zuzuschneiden und auf das Laminat aufzulegen, wohingegen es bei bekannten Folien erforderlich war, mehrere Folien/Schichten zuzuschneiden und diese nacheinander aufzulegen.

Bei einer ersten vorteilhaften Ausführungsform ist die zweite Schicht ein offenzelliger Schaum. Offenzellige Schäume zeichnen sich dadurch aus, dass die einzelnen Hohlräume in dem Schaum, also die "Poren" bzw. "Zellen" des Schaums, untereinander verbunden sind und mit der Umgebung des Schaums verbunden sind, Solcherart aufgebaute Schäume nehmen, verstärkt durch in den Zellen und den Zellenverbindungen wirkende Kapillarkräfte, besonders vorteilhaft Flüssigkeiten auf und können diese speichern.

Bei einer weiteren vorteilhaften Ausführungsform ist gegenüberliegend zur ersten Schicht mit der zweiten Schicht eine Abreißschicht verbunden, welche für eine Flüssigkeit, insbesondere für flüssiges Harz eines Faserverbundwerkstoffs, durchlässig ist. Diese Abreißschicht dient dazu, eine einfache Ablösbarkeit der Mehrschichtfolie von dem Faserverbundwerkstoff zu erzielen, nachdem der Faserverbundwerkstoff ausgehärtet ist.

Die derzeit gebräuchlichen Matrixwerkstoffe zeichnen sich durch hohe adhäsive und kohäsive Kräfte im ausgehärteten Zustand aus. Hierdurch wird die Ablösung der Mehrschichtfolie von dem produzierten Bauteil erschwert und es besteht die Gefahr, dass die Mehrschichtfolie mit der Oberfläche des Bauteils verklebt, die Mehrschichtfolie beim Ablösen teilweise zerrissen wird und solcherart Reste der Mehrschichtfolie auf dem Bauteil verbleiben. Diese müssen dann in aufwendiger Nacharbeit entfernt werden. Dies wird durch die Abreißschicht vermieden, die so gewählt wird, dass sie keine Verklebung zwischen der Mehrschichtfolie und dem Bauteil durch das Matrixmaterial zulässt oder die Adhäsivkräfte zumindest soweit verringert, dass ein Ablösen ohne verbleibende Reste ermöglicht wird. In vielen Fällen eignet sich als Abreißschicht eine Polytetrafluorethan(PTFE)-Schicht.

Um eine Aufnahme des überschüssigen Matrixwerkstoffs durch die zweite Schicht zu ermöglichen, muss die Abreißschicht für diese durchlässig sein, da sie, wenn die Mehrschichtfolie auf das Laminat aufgelegt ist, zwischen der zweiten Schicht und dem Laminat liegt. Vorteilhafterweise ist die Abreißschicht auch gasdurchlässig, um im Laminat befindliches Gas ebenfalls unter dem Einfluss eines relativen Druckunterschieds in die zweite Schicht befördern zu können. Die Abreißschicht kann beispielsweise eine perforierte Folie umfassen.

Bei einer besonderen Ausführungsform der Abreißschicht ist diese als mikroporöse Schicht ausgebildet. Hierdurch verbleiben nach Aushärtung des Matrixwerkstoffs lediglich kleine Stege in den Mikroporen der Abreißschicht stehen, welche das Bauteil mit der Mehrschichtfolie verbinden. Diese Stege können beim Ablösen der Mehrschichtfolie leicht durchtrennt werden.

Die erfindungsgemäße Mehrschichtfolie kann durch eine mit der Mehrschichtfolie verbundene, Kaschierschicht weiter fortgebildet werden, deren Verbindüngskräfte mit der Mehrschichtfolie geringer sind als ihre sich durch das aushärtende Matrixmaterial ausbildenden Verbindungskräfte zum Faserverbundbauteil. Insbesondere kann die Abreißschicht als. Kaschierschicht wirken.

Eine Kaschierschicht ist dazu bestimmt, bei Entfernen der Mehrschichtfolie zumindest teilweise an dem Laminat zu verbleiben. Zu diesem Zweck ist die Kaschierschicht beispielsweise so ander entsprechenden Schicht der Mehrschichtfolie befestigt, dass die Befestigungskräfte zwischen dieser Schicht und der Kaschierschtcht geringer sind als die Befestigungskrafte zwischen Kaschierschicht und dem Laminat im ausgehärteten Zustand. Alternativ kann die Kaschierschicht zwei miteinander verbundene Schichtlagen aufweisen, wobei Befestigungskräfte zwischen diesen zwei Schichten geringer sind als die Befestigungskräfte zwischen der Kaschierschicht und dem Laminat im ausgehärteten Zustand. Die Mehrschichtfolie wird mit der Seite der Kaschierschicht auf das Laminat aufgelegt.

Wenn die Mehrschichtfolie nach Aushärtung des Laminats wieder von dem Laminat abgenommen wird, so verbleibt die Kaschierschicht bzw. die dem Laminat zuweisende Schichtlage der Kaschierschicht auf dem Laminat und ggf. die der zweiten Schicht zuweisende Schichtlage der Kaschierschicht verbleibt an der Mehrschichtfolie. Die entstehende Trennebene stellt nachfolgend eine Oberfläche des Faserverbundbauteils dar.

Bei einer weiteren vorteilhaften Ausführungsform der erfindungsgemäßen Mehrschichtfolie ist die zweite Schicht mehrschichtig aufgebaut und weist mindestens zwei Teilschichten auf, deren Steifigkeit, deren Dichte, deren Porengröße, deren Porenarizahl pro Volumeneinheit, deren gemittelte. Porengröße und/oder deren Benetzbarkeit mit Matrixwerkstoff unterschiedlich sind. Bei dieser Ausführungsform kann durch entsprechende Auswahl der Teilschichten der zweiten Schicht sowohl ein gutes Anlegen der Mehrschichtfolie an die Kontur des Laminats erreicht werden als auch eine sichere Aufnahme des überschüssigen MatrixwerkStoffes sichergestellt Werden

So kann beispielsweise die direkt zu ,dem Laminat weisende, erste Teilschicht der zweiten Schicht eine geringere Steifigkeit als die anderen Teilschichten aufweisen, wodurch sich diese Teilschicht leicht verformen lässt und sich gut den Konturen des Laminats anpassen lässt. Die zweite Teiischicht und ggf. die weiteren Teilschichten, welche mit der ersten Teilschicht verbunden sind und nicht direkt auf dem Laminat aufliegen, können dann eine höhere Steifigkeit aufweisen, wodurch erreicht wird, dass sich diese Teilschichten unter dem Einfluss des Druckunterschieds zwischen Umgebung und dem Zwischenraum zwischen der ersten Schicht und der Bauteilform nicht so stark verformen wie die erste Teilschicht und folglich die Aufnahmefähigkeit für überschüssiges Matrixwerkstoff behält. Des weiteren ist es vorteilhaft, wenn die unmittelbar auf dem Laminat aufliegende, erste Teilschicht eine geringere Porengröße und/oder gemittelte Porengröße aufweist als die anderen Teilschichten, um eine hochwertige Oberfläche des hergestellten Bauteils zu erzielen. Unter gemittelter Porengröße soll hier der Mittelwert der Poren in einem kleinen Volumenbereich verstanden werden. Insbesondere soll unter gemittelter Porengröße der Mittelwert der Poren in einer Ebene, einer geringen Stärke verstanden werden, die parallel zu der Schicht bzw. Teilschicht liegt.

Bei der Auswahl der Teilschichten ist dabei darauf zu achten, eine ausreichende Aufnahmefähigkeit der Teilsthicht für Matrixwerkstoff bzw. einen ausreichenden Durchflussquerschnitt der Teilschicht, für Matrixwerkstoff bereitzustellen, wobei als Durchflussquerschnitt die Summe der Querschnitte der Poren der Schicht in Richtung normal zur Schichtebene verstanden werden soll. Dies bedeutet, dass bei verringerter Porengröße die Porenanzahl pro Volumenanzahl erhöht,werden sollte; um den etwa gleichen Durchflussquerschnitt zu erzielen.

Bei einer weiteren vorteilhaften Ausführungsform ist die zweite Schicht oder eine Teilschicht der zweiten Schicht eine Gradientenschicht. Eine Gradientenschicht ist dadurch gekennzeichnet, dass sich eine öder mehrere Materialeigenschaften der Schicht kontinuierlich in einer Richtung orthogonal zur Schichtebene ändern. Gradientenschichten weisen den Vorteil auf, dass sie keine sprunghaften Materialeigenschaftsveränderungen aufweisen und daher hohe Festigkeiten und homogenes Verhalten, bei mechanischer und/oder thermischer Beanspruchung zeigen. Die Materialeigenschaften von Gradientenschichten können sich dabei beispielsweise linear, progressiv oder degressiv ändern. Das Verwenden von einer gradierten zweiten Schicht oder einer zweiten Schicht mit einer gradierten Teilschicht ermöglicht dabei in besonders vorteilhafter Weise, die Funktion der zweiten Schicht sicherzustellen. So kann hierdurch sowohl ein besonders exaktes Anlegen der Mehrschichtfolie an das Laminat und auch sehr feine Konturendetails der Laminatoberfläche erzielt werden und gleichzeitig ein vollständiges Zusammendrücken der zweiten Schicht unter Einfluss des relativen Unterdrucks im Zwischenraum vermieden werden, wodurch eine gute Aufnahmefähigkeit für überschüssiges Matrixwerkstoff in der zweiten Schicht auch bei Einwirken des relativen Unterdrucks erhalten bleibt.

In der gradierten zweiten Schicht bzw. der gradierten Teilschicht der zweiten Schicht kann insbesondere die Steifigkeit, Dichte, Porengröße, Porenanzahl pro Volumeneinheit, deren gemittelte Porengröße und/oder deren Benetzbarkeit mit Matrixwerkstoff gradiert verlaufen. Diese Parameter sollen dabei definiert sein wie zuvor ausgeführt. Insbesondere ist es wiederum vorteilhaft, wenn die gradierte Schicht oder Teilschicht auf der bei Auflegen der Mehrschichtfolie dem Laminat zuweisenden Schichtseite eine geringere Steifigkeit und/oder eine geringere Porengröße aufweist und auf der der ersten Schicht zuweisenden Schichtseite eine höhere Steifigkeit aufweist.

Die Mehrschichtfolie mit einer mehrschichtig aufgebauten zweiten Schicht und/oder einer zumindest teilweise gradierten zweiten Schicht kann dadurch fortgebildet werden, dass sich in der zweiten Schicht oder einer Teilschicht der zweiten Schicht die Steifigkeit, Dichte, Porengröße und/oder die gemittelte Porengröße von der Grenzfläche zwischen erster und zweiter Schicht ausgehend verringern und/oder die Porenanzahl pro Volumeneinheit erhöht. Hierdurch werden die von der zweiten Schicht zu erfüllenden Funktionen, also das exakte Anlegen der Mehrschichtfolie an Strukturdetails des Laminats und die sichere Aufnahme von Matrixwerkstoff unter Einwirkung eines relativen Unterdrucks in besonders vorteilhafter Weise erreicht. Dabei kann insbesondere durch Erhöhung der. Porenanzahl pro Volumeneinheit bei gleichbleibender oder sich verringernder Porengröße eine höhere Elastizität der zweiten Schicht im Bereich der dem Laminat zuweisenden Seite als im Bereich der der ersten Schicht zuweisenden Seite erzielt werden.

Die erfindungsgemäße Mehrschichtfolie kann weiterhin vorteilhaft so weitergebildet werden, dass sich die erste Schicht in zumindest einem Abschnitt des Randbereichs der Folie weiter erstreckt als die zweite Schicht. Vor dem Auflegen der Mehrschichtfolie auf ein Laminat ist es regelmäßig erforderlich, die Mehrschichtfolie entsprechend den Abmessungen des Laminats bzw. der Bauteilformen zurechtzuschneiden. Durch das weitere Erstrecken der ersten Schicht kann durch Umklappen und Anlegen dieser Schicht an die Querschnittsfläche der zweiten Schicht - und darüber hinaus an gegebenenfalls weitere Schichten, an das Laminat und an die Bauteilform eine Abdichtung des Zwischenraums zwischen der ersten Schicht und der Bauteilform erreicht werden. Diese Abdichtung ist erforderlich, um einen relativen Unterdruck in dem vorgenannten Zwischenraum zu der Umgebung zu erzielen.

Dabei können sich gegebenenfalls vorhandene weitere Schichten ebenfalls weitererstrecken als die zweite Schicht und in solcher Weise beim Auflegen der Mehrschichtfolie auf das Laminat so angeordnet werden, dass diese weiteren Schichten an das Laminat und die Bauteilform angelegt werden und hierauf folgend die erste Schicht an diese weiteren Schichten angelegt wird.

Insbesondere bei der Fertigung größerer Serien von Bauteilen aus Faserverbundwerkstoffen, ist es dabei sinnvoll, die Mehrschichtfolie von vornherein in der entsprechenden Abmessung bereitzustellen, um den Arbeitsschritt des Zuschneidens zu vermeiden. Gerade in diesem Fall ist es dann vorteilhaft, wenn sich die erste Schicht im Randbereich weiter erstreckt als die zweite Schicht.

Die zuvor beschriebene Ausführungsform kann jedoch - insbesondere bei kleineren Serien - auch erreicht werden, indem in einem ersten Arbeitsgang ein Folienstück aus einer größeren Folie zurechtgeschnitten wird und in einem darauffolgenden Arbeitsgang im Randbereich der Folie die zweite Schicht entfernt wird, so dass hiernach wiederum die erste Schicht sich weiter erstreckt als die zweite Schicht.

Die vorgenannte Ausbildungsform kann insbesondere weiter fortgebildet werden, indem sich die erste Schicht in zumindest einem Abschnitt des Randbereichs der Folie weiter erstreckt als die anderen Schichten. In diesem Fall kann die erste Schicht direkt an die Querschnittsflächen der anderen Schichten, das Laminat und die Bauteilform angelegt werden und so eine, gute Dichtwirkung erreicht werden.

Die zuvor beschriebenen Ausführungsformen mit sich weiter als die zweite oder die anderen Schichten erstreckender erster Schicht sind insbesondere dann vorteilhaft, wenn sich die erste Schicht über die zweite Schicht bzw. die anderen Schichten um einen Betrag weiter erstreckt, welcher mindestens der addierten Gesamtstärke der Mehrschichtfolie und des Laminats entspricht. Hierdurch wird gewährleistet, dass sich der überstehende Teil der ersten Schicht an die Querschnittsfläche der anderen Schichten anlegen lässt und hierdurch eine ausreichende Abdichtung des Zwischenraums erzielt wird.

Ein weiterer Aspekt der Erfindung ist ein Verfahren zum Herstellen von Bauteilen aus Faserverbundwerkstoffen, bei dem eine Mehrschichtfolie der zuvor beschriebenen Art auf den Faserverbundwerkstoff aufgelegt wird. Die Mehrschichtfolie wird dabei anstelle der bei bekannten Handlaminierverfahren, Autoklavier-Verfahren oder ähnlichen Herstellungsverfahren verwendeten Verarbeitungszwischenschichten zur Abdichtung des Laminats gegen die Umgebung verwendet.

Das Verfahren kann insbesondere fortgebildet werden, indem es die aufeinanderfolgenden Verfahrensschritte gemäß Anspruch 13 umfasst. Dabei kann das Aufbringen des Faserverbundlaminats manuell oder automatisiert erfolgen und es können eine oder mehrere Schichten des Laminats in diesem Verfahrensschritt aufgebracht werden. Das gasdichte Abdichten des Randbereichs kann beispielsweise durch Abkleben des Randbereichs mit einem gasdichten Klebeband erfolgen, oder es kann ein im Randbereich überstehender Teil der ersten Schicht so an die Querschnittsflächen der Mehrschichtfolie, des Laminats und an die Bauteilform angelegt werden, dass eine Abdichtung gegen die Umgebung erzielt wird.

Das Erzeugen des relativen Unterdrucks kann beispielsweise durch Verbinden des abgedichteten Raums zwischen der ersten Schicht und der Bauteilform mit einer Unterdruckquelle, beispielsweise einer Vakuumpumpe erreicht werden. Weiterhin kann der relative Unterdruck erzeugt werden, indem die Umgebung des abgedichteten Raums mit einem Überdruck beaufschlagt wird und der abgedichtete Raum mit einem unter Normaldruck stehenden Raum verbunden wird.

Schließlich ist ein weiterer Aspekt der Erfindung ein mittels des vorgenannten Verfahrens hergestelltes Bauteil aus Faserverbundwerkstoff. Dieses Bauteil kann sich insbesondere dadurch auszeichnen, dass es in einer Richtung senkrecht zur Flächenausdehnung des Bauteils wesentlich größere Kontur-Höhenunterschiede aufweist als Bauteile, die mit konventioneller Folie und konventionellen Verarbeitungszwischenschichten hergestellt wurden. Weiterhin kann das mittels des vorgenannten Verfahrens hergestellte Bauteil aus Faserverbundwerkstoff zahlreiche Hinterschneidungen aufweisen, insbesondere Hinterschneidungen mit größerem Hinterschnitt als bei Bauteilen, die mit konventioneller Folie und Verarbeitungszwischenschichten hergestellt wurden. Bauteile, die mit der erfindungsgemäßen Mehrschichtfolie hergestellt werden, können gegenüber konventionell hergestellten, Bauteilen kompliziertere Geometrien aufweisen insbesondere lassen sich mittels der erfindungsgemäßen Mehrschichtfolie auch dann kleine Detailstrukturen in Bauteilen verwirklichen, wenn diese Bauteile benachbart zu diesen kleinen Detailstrukturen relativ große Geometriesprünge aufweisen. Mittels der erfindungsgemäßen Kaschierschicht kann die Oberfläche des Bauteils in einer beliebig gewünschten Weise gestaltet werden. Beispielsweise sind besonders glatte Oberflächen oder strukturierte Oberflächen mit besonderen Strukturen produzierbar

Vorteilhafte Ausführungsformen der Erfindung werden anhand der Figuren erklärt. Es zeigen.
- Fig. 1: eine erste Ausführungsform der erfindungsgemäßen Mehrschichtfolie auf einem Laminat, welches auf einer Bauteilform aufliegt,
- Fig. 2: eine zweite Ausführungsform, der erfindungsgemäßen Mehrschichtfolie auf einem Laminat auf einer Bauteilform,
- Fig. 3: eine, dritte Ausführungsform der erfindungsgemäßen Mehrschichtfolie auf einem Laminat auf einer Bauteilform.
- Fig. 4: eine vierte Ausführungsform der erfindungsgemäßen Mehrschichtfolie auf einem Laminat auf einer Bauteilform
- Fig. 5: eine fünfte Ausführungsform der erfindungsgemäßen Mehrschichtfolie auf einem Laminat auf einer Bauteilform, und
- Fig. 6: eine sechste Ausführungsform der erfindungsgemäßen Mehrschichtfolie, auf einem Laminat auf einer Bauteilform.

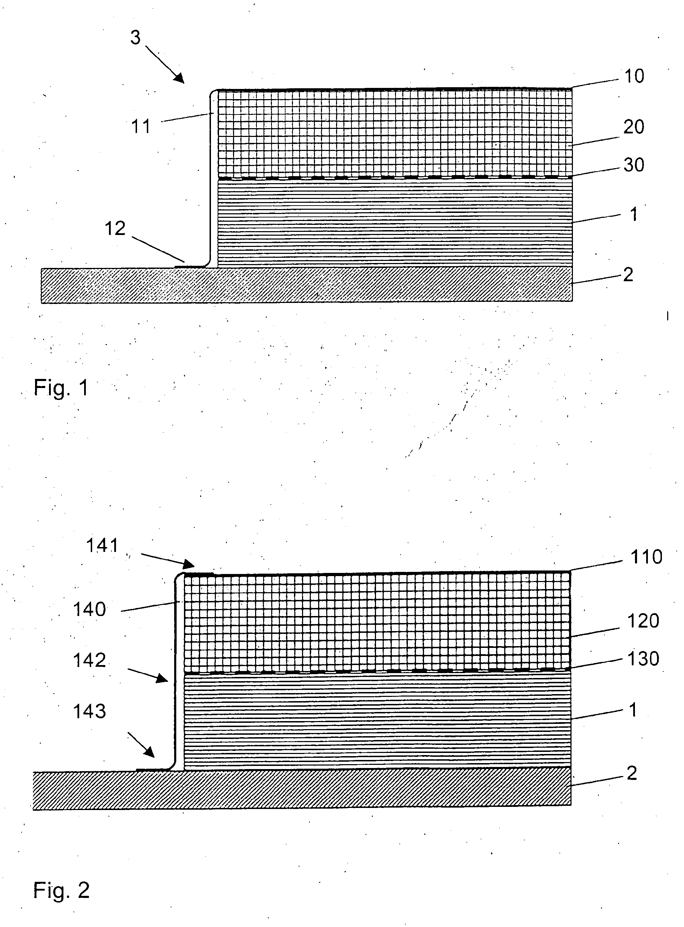

Die in Fig. 1 dargestellte Ausführungsform der Mehrschichtfolie, weist eine luftundurchlässige Folie 10 auf, an der eine Schaumschicht 20 befestigt ist. Die Folie 10 und die Schaumschicht 20 sind flächig miteinander verbunden, beispielsweise durch thermische Verschweißung oder durch Verklebung.

Die Schaumschicht 20 besteht aus einem offenzelligen, monomodalen Schaum, d.h. einem Schaum, bei dem die Poren eine monomodale Größenverteilung besitzen und untereinander verbunden sind. Das Polymergerüst kann aus einem einzigen Polymer gebildet werden, es können jedoch auch Polymergerüste aus einem Copolymer, einem Blend, einem Verbundwerkstoff, einem Nanocomposite oder einer Mischung aus den vorgenannten verwendet werden. Die Schaumschicht 20 besitzt eine sehr gute Benetzbarkeit mit einem Matrixwerkstoff, welches als Matrixmaterial für einen zu verarbeitenden Verbundwerkstoff verwendet wird.

Auf der der Folie 10 gegenüberliegenden Seite ist an der Schaumschicht 20 eine Kontaktschicht 30 befestigt, die wiederum flächig mit der Schaumschicht 20 verbunden ist. Die Abreißschicht 30 ist perforiert und somit durchlässig für Flüssigkeiten und Gase. Sie dient dazu, eine Verklebung der Schaumschicht 20 mit einem Laminat, auf welches die Mehrschichtfolie aufgelegt wird, zu vermeiden und auf diese Weise ein Entfernen der Mehrschichtfolie nach der Aushärtung des Laminats zu erleichtern.

In der in Fig. 1 dargestellten Anwendung ist die erfindungsgemäße Mehrschichtfolie auf ein Laminat 1 aufgelegt, welches aus mehreren Laminatschichten aufgebaut ist. Die Mehrschichtfolie ist so auf das Laminat 1 aufgebracht, dass die Abreißschicht 30 bündig auf der Oberfläche des Laminats aufliegt.

Das Laminat 1 ist wiederum als schichtweiser Aufbau auf eine Bauteilform 2 aufgetragen, so dass die Grenzfläche zwischen dem Laminat 1 und der Bauteilform 2 der Grenzfläche zwischen dem Laminat 1 und der Abreißschicht 30 gegenüberliegt.

Die Folie 10 erstreckt sich im Randbereich 3 der Mehrschichtfolie weiter als die Schaumschicht 20 und die Abreißschicht 30. Auf diese Weise ist es möglich, wie in der in Fig. 1 dargestellten Anordnung gezeigt, die Folie 10 so umzuschlagen, dass ein Abschnitt 11 der Folie die Seitenflächen der Schaumschicht 20, der Abreißschicht 30 und des Laminats 1 im Bereich 3 abdeckt und ein Folienabschnitt 12 gasdicht an der Bauteilform befestigt werden kann. Auf diese Weise wird zwischen der Folie 10, dem überlappenden Abschnitt 11 und dem an der Bäuteilform befestigten Abschnitt 12 der Folie 10 und der Bauteilform 2 ein gasdicht gegen die. Umgebung abgedichteter Zwischenraum ausgebildet, in welchem die Schaumschicht 20, die Abreißschicht 30 und das Laminate 1 angeordnet sind.

Die Mehrschichtfolie der Fig. 2 weist ebenfalls eine Abfeißschicht 130 und eine Schaumschicht 120 auf, welche die gleichen Eigenschaften wie die entsprechenden Schichten 30, 20 der Fig. 1 haben. Die Folie 110 der Mehrschichtfolie in Fig. 2 erstreckt sich im Randbereich nicht weiter als die Schaumschicht 120 bzw. die Abreißschicht 130, sondern hat die gleichen Längsabmessungen wie diese beiden Schichten. Die gasdichte Abdichtung der Seitenflächen im Bereich 3 der Schaumschicht 120, der Abreißschicht 130 und des Laminats 1 wird durch Aufbringen eines Dichtungsbandes 140 erreicht. Das Dichtungsband 140 wird hierzu mit einem ersten Dichtungsbandabschnitt 141 gasdicht mit der Folie 110 verbunden. Ausgehend von diesem ersten Dichtungsbandabschnitt 141 deckt das Dichtungsband mit seinem Mittelbereich 142 die Querschnittsseitenflächen der Schaumschicht 120, der Abreißschicht 130 und des Laminats 1 ab und ist anschließend an diesen Mittelabschnitt 142 in einem zweiten Dichtungsbandabschnitt 143 gasdicht mit der Bauteilform 2 verbunden.

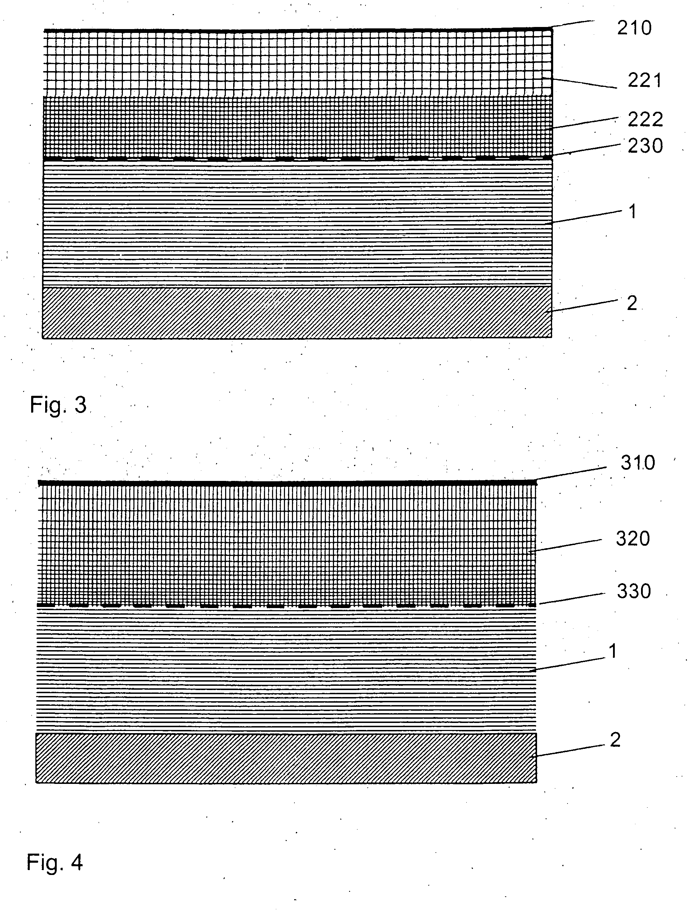

Fig. 3 zeigt eine Mehrschichtfolie, welche eine Folie 210 umfasst, die hinsichtlich ihrer Eigenschaften mit der Folie 10 der Fig. 1 vergleichbar ist. Mit der Folie 210 ist eine Schaumschicht verbunden, welche aus zwei Teilschaumschichten 221, 222 aufgebaut ist. Die zwei Teilschaumschichten 221, 222 sind als offenzelliger, monomodaler Schaum ausgeführt. Die erste Teilschaumschicht 221 weist Zellen mit einem größeren Porendurchmesser auf als die zweite Teilschaumschicht 222. Die Anzahl der Poren pro Volumeneinheit ist in der ersten Teilschaumschicht 221 geringer als in der zweiten Teilschaumschicht 222. Die erste Teilschaumschicht 221 kann daher auch dann, wenn sie durch mechanische, hydraulische, pneumatische oder andere Einflüsse stark komprimiert wird, einen Durchfluss von Gasen und Flüssigkeiten durch die Poren und die sie verbindenden Kanäle gewährleisten. Die zweite Teilschaumschicht 222 ist durch ihren feinzelligen Aufbau in der Lage, sich sehr exakt und präzise an kleine Detailstrukturen des Laminats 1 anzulegen. Die zweite Teilschaumschicht 222 ist flächig mit der ersten Teilschaumschicht 221 verbunden in solcher Art, dass ein Durchfluss von Gasen und Flüssigkeiten durch die Grenzfläche zwischen den beiden Teilschaumschichten möglich ist.

An der zweiten Teilschaumschicht 222 ist, gegenüberliegend zu ihrer Grenzfläche zu der ersten Teilschaumschicht 221, eine Abreißschicht 230 befestigt, deren Eigenschaften identisch sind mit denjenigen der Abreißschicht 30 der Fig. 1.

Die in Fig 4 dargestellte Mehrschichtfolie weist, ebenso wie die vorangegangenen Mehrschichtfolien, eine Dichtungsfolie 310 auf, deren Eigenschaften vergleichbar sind mit der Dichtungsfolie 10 der Fig. 1. An der Dichtuhgsfolie 310 ist eine Schaumschicht 320 flächig befestigt. Die Schaumschicht 310 besteht aus einem Integralschaum. Dabei ist der Integralschaum der Schaumschicht 320 so ausgeführt, dass die Porengröße sich ausgehend von der Grenzfläche zwischen der Schaumschicht,320 und der Dichtungsfölie 310 hin zu der Grenzfläche-zwischen der Schaumschicht 320 und der Abreißschicht 330 kontinuierlich verringert und sich gleichzeitig die Porenanzahl pro Volumeneinheit kontinuierlich erhöht. Auf diese Weise wird in dem Integralschaum der Schaumschicht 320 ein gleichmäßiger Übergang von einem großporigen Schaum mit wenigen Poren pro Volumeneinheit zu einem feinporigen Schaum mit vielen Poren pro Volumeneinheit erreicht. Der Integralschaum weist daher in verbesserter Weise die Eigenschaften der aus zwei Teilschibht-Schäumen aufgebauten Schaumschicht 221, 222 der Fig. 3 auf und ist einerseits in der Lage auch bei starker Kompression Gase und Flüssigkeiten zu leiten und zu speichern und kann sich andererseits sehr exakt und präzise an kleine Detailstrukturen des Laminats 1 anlegen.

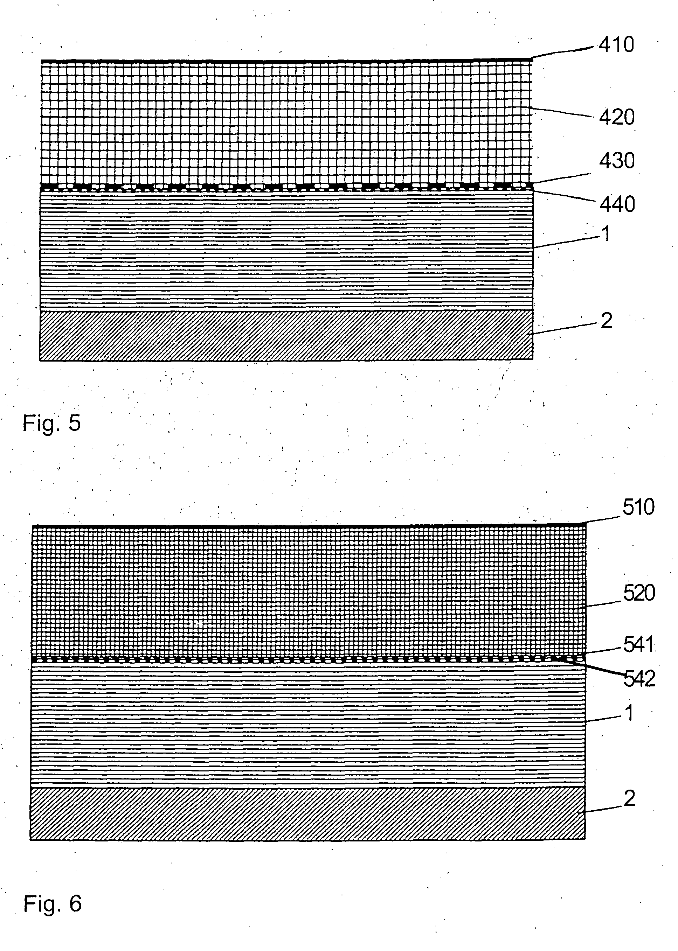

Die in Fig. 5 dargestellte Mehrschichtfolie weist eine Dichtungsfolie 410 und eine Schaumschicht 420 auf, die vergleichbar sind mit der Dichtungsfolie 10 und der Schaumschicht 20 der Fig. 1. An der Schaumschicht 420 ist gegenüberliegend zur Dichtunüsfolie 410 eine Äbreißschicht 430 flächig befestigt. Die Abreißschicht 430 ist gas- und Matrixwerkstoffdurchlässig und ist auf ihrer der Schaumschicht 420 gegenüberliegenden Fläche mit einer Kaschierschicht 440 flächig verbunden.

Die Kaschierschicht 440 ist so ausgebildet, dass sie durchlässig ist für das aus dem Laminat 1 austretende Matrixwerkstoff, von diesem Matrixwerkstoff durchtränkt wird und auf diese Weise fest mit dem Laminat 1 verklebt wird, wenn der Matrixwerkstoff aushärtet. Bei Entfernen der Mehrschichtfolie nach Aushärten des Matrixwerkstoffes erfolgt eine Trennung in der Grenzfläche zwischen der Abreißschicht 430 und der Kaschierschicht 440 und die Kaschierschicht 440 verbleibt fest verklebt auf dem Laminat 1 und bildet die Oberflächenschicht dieses Laminats.

Die Kaschierschicht 440 könnte jedoch auch direkt mit der Schaumschicht 420 verbunden sein. In diesem Falle ist keine Abreißschicht vorhanden und die Trennung würde zwischen der Kaschierschicht 440 und der Schaumschicht 420 erfolgen.

Fig. 6 zeigt einen gegenüber Fig. 5 vereinfachten Aufbau der Mehrschichtfolie. Die Mehrschichtfolie der Fig. 6 weist eine Dichtungsfolie 510 und eine Schaumschicht 520 auf, welche in ihren Eigenschaften der Dichtungsfolie 10 und der Schaumschicht 20 der Fig. 1 gleicht..

Auf der der Dichtungsfolie 510 gegenüberliegenden Fläche der Schaumschicht 520 ist eine Kaschierschicht 541, 542 befestigt, welche aus einer ersten Teilgewebeschicht 541 und einer zweiten Teilgewebeschicht 542 besteht. Die Mehrschichtfolie der Fig. 6 ist, wie zuvor beschrieben, auf ein Laminat 1, welches auf einer Bauteilform 2 aufgebaut ist, aufgelegt. Wird die Mehrschichtfolie der Fig. 6 nach Aushärten des Matrixwerkstoffes des Laminats 1 von dem Laminat abgenommen, so verbleibt die zweite Teilgewebeschicht 542 fest verklebt auf dem Laminat 1, wohingegen die erste Teilgewebeschicht 541 an der Schaumschicht 520. verbleibt. Zu diesem Zweck ist die Grenzfläche zwischen den Teilgewebeschichten 541, 542 so ausgebildet, dass die Haftung zwischen diesen beiden Teilgewebeschichten geringer ist als die Haftung der Teilgewebeschicht 542 an dem Laminat und als die Haftung zwischen der Teilgewebeschicht 541 und der Schaumschicht 520.

Die, Mehrschichtfolie der Figuren 3 bis 6 ist in gleicher Weise wie in Figuren 1 und 2 auf ein Laminat 1, welches auf eine Bauteilform 2 aufgebaut ist, aufgelegt. Die Abdichtung der Querschnittseitenflächen der Mehrschichtfolienschichten, und des Laminats 1 und die gasdichte Verbindung mit der Bauteilform 2 kann wiederum in gleicher Weise wie in Fig. 1 oder Fig. 2 durch einen überstehenden Abschnitt der Folie 210, 310, 410 bzw. 510 oder durch ein Abdichtband erreicht werden.

Die vorgenannten Schichtaufbauten der Mehrschichtfolie können in beliebiger Weise, angepasst an bestimmte Anwenduhgszwecke, miteinander, kombiniert werden. Insbesondere kann, eine aus zwei oder mehr Teilschichten bestehende Schaumschicht oder eine aus einem Integralschaum aufgebaute Schaumschicht mit einer Kaschierchicht gemäß Fig. 5 oder Fig. 6 kombiniert werden.

Die Schaumschicht 20, 120, 221, 222, 320, 420 und 520 kann als offenzelliger Schaum, als Vlies, als textiles Gewebe oder ähnliches ausgeführt sein.

Eine bevorzugte Ausführungsform des erfindungsgemäßen Verfahrens besteht darin, dass zunächst in einem manuellen oder automatisierten Verfahren nacheinander und alternierend mehrere Faser- und Matrixwerkstoffschichten 1 auf eine Bauteilform 2 aufgetragen werden. Hierauf folgend wird eine abschließende Matrixwerkstoffschicht auf das so aufgebaute Laminat 1 aufgetragen. Alternativ kann abschließend zwecks Erzielung einer glatten Oberfläche eine Gelcoatschicht aufgetragen werden.

Nachdem auf solche Weise das Laminat auf der Bauteilform aufgebaut wurde, wird unmittelbar auf das noch flüssige Matrixwerkstoff eine Mehrschichtfolie gemäß einer der Figuren 1 bis 6 so auf die der Bauteilform gegenüberliegende Oberfläche des Laminats aufgelegt, dass die Schaumschicht, bzw. die Abreißschicht bzw. die Kaschierschicht .flächig auf der Oberfläche des Laminats aufliegt. Hierauf folgend werden durch Abdichten mittels eines überstehenden Teils der Dichtungsfolie oder durch Abdichten mittels eines Dichtungsbandes die Querschnittsseitenflächen der Mehrschichtfolie und des Laminats abgedichtet und eine gasdichte Verbindung zwischen der Dichtungsfolie und der Bauteilform hergestellt. Auf diese Weise wird ein gasdichter Zwischenraum zwischen der Dichtungsfolie und der Bauteilform hergestellt, in welchem die Schaumschicht, die Abreißschicht und gegebenenfalls die Kaschierschicht der Mehrschichtfolie und das Laminat 1 angeordnet sind.

Hierauf folgend wird der Absaugvorgang vorgenommen. Hierzu kann der gesamte Aufbau aus Laminat, Bauteilform und Mehrschichtfolie in einen Autoklaven eingebracht und ein Druck von beispielsweise bis zu 7 bar auf die Außenseite der Dichtungsfolie aufgebracht werden. Um durch diese Druckeinwirkung eine Komprimierung des Aufbaus aus Mehrschichtfolie und Laminat zu erzielen ist es vorteilhaft, die Schaumschicht mittels einer Druckausgleichsleitung mit dem Atmosphärendruck oder einem geringeren Druck als dem im Autoklaven herrschenden Druck zu verbinden. Diese Druckausgleichsverbindungsleitung wird vorzugsweise in dem an die Dichtungsfolie grenzenden Bereich der Schaumschicht angelegt, um auch bei Komprimierung der Schaumschicht in ihrem zu dem Laminat weisenden Bereich noch eine Drückausgleichswirkung zu erzielen. Insbesondere bei Verwendung von mehrschichtigen Schaumschichten oder Schaumschichten aus lntegralschaum ist es vorteilhaft, wenn die Druckausgleichsleitung oder die mehreren Druckausgleichsleitungen in dem der Grenzfläche zum Laminat bzw. zur Abreißschicht bzw. zur Kaschierschicht gegenüberliegenden Bereich der Schaumschicht angeordnet sind.

Zusätzlich kann, um die Verformbarkeit der Mehrschichtfolie zu erhöhen und die Aushärtung des Matrixwerkstoffes des Laminats 1 zu erreichen oder zu beschleunigen in dem Autoklaven eine erhöhte Temperatur, üblicherweise etwa 180 °C, erzeugt werden. Nach einer Einwirkdauer von ca. 2 Stunden ist der Matrixwerkstoff ausgehärtet und der Aufbau kann aus dem Autoklaven entnommen werden. Hierauf folgend kann die Mehrschichtfolie von dem Laminat und das Laminat von der Bauteilform abgenommen werden. Das Faserverbundbauteil ist hieraufhin vorgefertigt und kann weiteren Fertigungsschritten, beispielsweise einer spanenden Bearbeitung oder einer Oberflächenbehandlung, zugeführt werden.

Alternativ zur Aushärtung im Autoklaven kann über eine Vakuumleitung ein Vakuum an den Zwischenraum zwischen Dichtungsfolie und Bauteilform angelegt werden. Die Verbindungsleitung zur Vakuumquelle wird dabei in vorteilhafter Weise in der gleichen Art angeordnet wie die zuvor beschriebene Druckausgleichsleitung, d.h. in dem Bereich der Schaumschicht, der an die Dichtungsfolie grenzt.

Nach Beendigung des Fertigungsverfahrens ist die Mehrschichtfolie mit ausgehärtetem Matrixwerkstoff aus dem Laminat 1 durchtränkt und kann in der Regel nicht wiederverwendet werden.

## Patentansprüche

1. Mehrschichtfolie zur Verarbeitung von Faserverbundwerkstoffen, mit
- einer ersten, gasundurchlässigen Schicht,
- einer zweiten, mit der ersten Schicht verbundenen Schicht mit zur Umgebung hin offenen Poren zum Aufnehmen eines flüssigen, aushärtbaren Matrixwerkstoffs.

2. Mehrschichtfolie nach Anspruch 1,
**dadurch gekennzeichnet, dass** die zweite Schicht ein offenzelliger Schaum ist.

3. Mehrschichtfolie nach Anspruch 1 oder 2,
**gekennzeichnet durch** eine gegenüberliegend zur ersten Schicht mit der zweiten Schicht verbundene Abreißschicht, welche für eine Elüssigkeit, insbesondere für flüssigen Matrixwerkstoff eines Faserverbundwerkstoffs, durchlässig, ist.

4. Mehrschichtfolie nach einem der vorhergehenden Ansprüche, **gekennzeichnet durch** eine gegenübeniegend zur ersten Schicht mit der Mehrschichtfolie verbundene Kaschierschicht, deren Verbindungskräfte mit der Mehrschichtfolie geringer sind als ihre sich **durch** das aushärtende Matrixmaterial ausbildenden Verbindungskräfte zum Faserverbundwerkstoff.

5. Mehrschichtfolie nach einem der vorhergehenden Ansprüche, **dadurch gekennzeichnet, dass** die zweite Schicht mehrschichtig aufgebaut ist und mindestens zwei Teilschichten aufweist, deren Steifigkeit, deren Dichte, deren Porengröße, deren Porenanzahl pro Volumeneinheit, deren gemittelte Porengröße und/oder deren Benetzbarkeit mit Matrixwerkstoff unterschiedlich sind.

6. Mehrschichtfolie nach einem der vorhergehenden Ansprüche,
**dadurch gekennzeichnet, dass** die zweite Schicht oder eine Teilschicht der zweiten Schicht eine Gradientenschicht ist.

7. Mehrschichtfolie nach Anspruch 6,
**dadurch gekennzeichnet, dass** die Steifigkeit, Dichte, Porengröße, Porenanzahl pro Volumeneinheit und/oder die gemittelte Porengröße gradiert verlaufen.

8. Mehrschichtfolie nach einem der Ansprüche 5 bis 7,
**dadurch gekennzeichnet, dass** sich in der zweiten Schicht oder einer Teilschicht der zweiten Schicht die Steifigkeit, Porengröße, die gemittelte Porengröße und/oder deren Benetzbarkeit mit Matrixwerkstoff von der Grenzfläche zwischen erster und zweiter Schicht ausgehend verringern und/oder die Porenanzahl pro Volumeneinheit erhöht.

9. Mehrschichtfolie nach einem der vorhergehenden Ansprüche,
**dadurch gekennzeichnet, dass**, sich die erste Schicht in zumindest einem Abschnitt des Randbereichs der Folie weiter erstreckt als die zweite Schicht.

10. Mehrschichtfolie nach Anspruch 9,
**dadurch gekennzeichnet, dass** sich die erste Schicht in zumindest einem Abschnitt des Randbereichs der Folie weiter erstreckt als die anderen Schichten.

11. Mehrschichtfolie nach Anspruch 9 oder 10,
**dadurch gekennzeichnet, dass** sich die erste Schicht über die zweite Schicht bzw. die anderen Schichten um einen Betrag weiter erstreckt, welcher mindestens der Gesamtstärke der Mehrschichtfolie entspricht.

12. Verfahren zum Herstellen von Bauteilen aus Faserverbundwerkstoffen, bei dem eine Mehrschichtfolie nach einem der vorgehenden Ansprüche auf das Faserverbundlaminat aufgebracht wird zum Aufnehmen des überschüssigen Matrixwerkstoffes aus dem Faserverbundlaminat.

13. Verfahren nach Anspruch 12, mit den Verfahrensschritten
- Aufbringen eines Faserverbundlaminats auf eine Bauteilform.
- Aufbringen einer Mehrschichtfolie nach einem der Ansprüche 1 bis 11 auf das Faserverbundlaminat
- Fluiddichtes Abdichten des Randbereichs des Faserverbundlaminats in solcher Weise, dass zwischen der ersten Schicht der Mehrschichtfolie und der Bauteilform ein gegen die Umgebung abgedichteter Raum entsteht,
- Erzeugen eines relativen Unterdrucks in dem abgedichteten Raum, vorzugsweise in der zweiten Schicht der Mehrschichtfolie, zu der Umgebung.

14. Verfahren nach Anspruch 13, **dadurch gekennzeichnet, dass** das fluiddichte Abdichten des Randbereichs erreicht wird, indem ein sich gemäß einem der Ansprüche 9 bis 11 weiter erstreckender Abschnitt der ersten Schicht der Mehrschichtfolie in solcher Weise an die anderen Schichten der Mehrschichtfolie, an das Faserverbundlaminat und an die Bauteilform angelegt wird; dass die anderen Schichten der Mehrschichtfolie und das Faserverbundlaminat im Randbereich fluigdicht abgedichtet werden.

15. Bauteil aus Faserverbundwerkstoff, **dadurch gekennzeichnet, dass** es mittels eines Verfahrens gemäß einem der Ansprüche 12 bis 14 hergestellt wurde.

16. Bauteil nach Anspruch 15, **gekennzeichnet durch** eine Oberflächenschicht, welche **durch** eine Kaschierschicht nach Anspruch 4 erzeugt wurde.

17. Verwendung einer Mehrschichtfolie nach einem der Ansprüche 1 bis 11 zum Aufnehmen von überschüssigem Matrixwerkstoff aus einem Faserverbundlaminat.
